# EUROPÄISCHE PATENTANMELDUNG

(11) **EP 2 072 473 A1**
(43) Veröffentlichungstag der Anmeldung: **24.06.2009**
(21) Anmeldenummer: 08019889.8
(22) Anmeldetag: 14.11.2008
(51) Int. Cl.: C02F 9/02, C02F 9/04, C02F 103/14

(54) **Spülwasseraufbereitung in der Tauchlackierung mit vollständiger Rückführung von VE-Wasser in das Spülwassersystem**

(30) Priorität: 18.12.2007 DE 102007061504
(71) Anmelder: Henkel AG & Co. KGaA, 40589 Düsselsdorf (DE)
(72) Erfinder: Peirow, Iradj, 47802 Krefeld (DE)

(57) **Zusammenfassung**

Die vorliegende Erfindung betrifft die vollständige Rückgewinnung von Spülwasser bei der industriellen Tauchlackierung mittels eines Verfahrens zur Gewinnung von vollentsalztem Wasser, das weitgehend von Lackrückständen befreit ist, aus dem Spülwasser der Tauchlackierung und mittels Rückführung des vollentsalzten Wassers in das Speisewasser des Spülwassersystems.

## Beschreibung

Die vorliegende Erfindung betrifft die vollständige Rückgewinnung von Spülwasser bei der industriellen Tauchlackierung mittels eines Verfahrens zur Gewinnung von vollentsalztem Wasser, das weitgehend von Lackrückständen befreit ist, aus dem Spülwasser der Tauchlackierung und mittels Rückführung des vollentsalzten Wassers in das Speisewasser des Spülwassersystems.

In industriellen Prozessen zur Tauchlackierung von metallischen Bauteilen fallen bei der Reinigung der beschichteten Bauteile in den Spülbädern hohe Abwassermengen an, die entsprechend bestehender Richtlinien behandelt und letztendlich verworfen werden müssen. In den bei der Reinigung eingesetzten Spülbädern reichern sich Lackbestandteile, insbesondere dispergierte Lackpartikel, sowie niedrigmolekulare Bindemittelbestandteile und wasserlösliche Salze an, so dass das Spülwasser kontinuierlich mit vollentsalztem Wasser (VE-Wasser) aufgefrischt werden muss, um Einbußen hinsichtlich der Beschichtungsqualität durch einen unzureichenden Spüleffekt oder die physikalische Ablagerung von Lackagglomeraten auf den beschichteten Bauteilen zu vermeiden. Die Vermeidung von Ablagerungen ist insbesondere bei der Tauchlackierung von Präzisions-Maschinenelementen ausschlaggebend für eine hohe Güte der Beschichtung und die Gewährleistung der mechanischen Funktionalität des Bauteils.

Als verfahrenstypisch kann die Pflege der Spülbäder für die etablierte kathodische Tauchlackierung herangezogen werden, bei der das Spülwasser aus dem Ultrafiltrat des lackhaltigen Tauchbades und durch Zusatz von vollentsalztem Wasser bereitgestellt wird. Die ständige Zugabe von VE-Wasser in das Spülbad erfolgt dabei derart, dass eine kritische Salzfracht nicht überschritten wird. Die enorme Abfallmenge, der gleichzeitig hohe Bedarf an VE-Wasser und die hohen Rüstzeiten verursachen eine hohe wirtschaftliche Belastung.

Aus der EP 1 295 630 ist ein Verfahren zur Aufbereitung von Abwasser aus dem letzten Spülschritt einer kathodischen Tauchlackierung bekannt, bei der das Spülwasser über ein Membranverfahren ("Cross-Flow" Verfahren) aufgearbeitet wird, wobei das Permeat in das Spülbad zurückführt wird, während das aufkonzentrierte Abwasser des Spülbades im Kreislauf der Membranfiltrationsanlage verbleibt. Da in einem solchen Membranverfahren der pH-Wert des Filtrates gegenüber dem Spülwasser um 0,2 - 0,5 abgesenkt wird, ist eine exakte Kontrolle des pH-Wertes des Filtrates notwendig, bevor die Rückführung in das Spülwassersystem vorgenommen werden kann. Obwohl über dieses Verfahren ein Großteil des Spülwassers zurückgewonnen werden kann, gilt es das Konzentrat des Membranfiltrationsprozesses weiter aufzuarbeiten und umweltgerecht zu entsorgen. Darüber hinaus kann ein Filtrat, das in einem solchen Verfahren auch aufgrund der aufwendigen Justierung des pH-Wertes eine erhöhte Leitfähigkeit aufweist, meist nicht unmittelbar für die Reinigung von hochwertigen Tauchlack-beschichteten Machinenelementen eingesetzt werden.

Die Aufgabe der vorliegenden Erfindung liegt demnach darin, vollentsalztes Wasser, welches weitgehend von Lackrückständen befreit ist, aus dem Spülwasser der Tauchlackierung unter nahezu vollständiger Vermeidung von Abwasser zurückzugewinnen und in das Spülwassersystem der Tauchlackierung zurückzuspeisen.

Diese Aufgabe wird von einem Verfahren erfüllt, bei dem
a) Teilvolumina des Spülwassersystems in einen Koagulationsbehälter enthaltend das Spülwasser überführt werden, dort Koagulationsmittel hinzudosiert und der pH-Wert angepasst wird, und
b) aus dem Koagulationsbehälter Teilvolumina des behandelten Spülwassers über eine Filtrationsstufe geschickt und dabei von koagulierten Lackrückständen befreit werden,
c) wonach das Filtrat der Filtrationsstufe über ein lonenaustauschersystem geschickt und zumindest Teilvolumina des entsalzten Permeates des lonenaustauschersystems in das Spülwassersystem der Tauchlackierung zurückgeführt werden.

Unter dem Begriff der Tauchlackierung, werden im Sinne der vorliegenden Erfindung solche Prozesse zusammengefasst, in denen Bauteile, beispielsweise Automobilkarosserien und Maschinenelemente, zur Beschichtung mit Zusammensetzungen enthaltend dispergierte organische Lacke durch Tauchen in Kontakt gebracht werden. Hierzu gehören unter anderem die Elektrotauchlackierung, insbesondere die kathodische Tauchlackierung, sowie die außenstromlose autophoretische Beschichtung aus selbstabscheidenden lackhaltigen Zusammensetzungen.

Vorzugsweise wird das erfindungsgemäße Verfahren in einem geschlossenen Kreislauf gefahren, so dass die jeweiligen Teilvolumina in den Schritten a)-c) gleich groß sind. Besonders bevorzugt erfolgt die Entnahme der Teilvolumina dabei kontinuierlich, d.h. mit einem konstanten Volumenstrom. Hierdurch wird gewährleistet, dass das gesamte Spülwasser über das erfindungsgemäße Verfahren in einem der Tauchlackierung integrierten Prozess behandelt werden kann, ohne dass dabei Abwässer entstehen, die getrennt behandelt und abgeführt werden müssen.

Die Koagulation des im Spülwasser befindlichen dispergierten Tauchlackes ist ein kinetisch komplexer Vorgang, der über die Zwischenstufen der Agglomeration der Lackpartikel und der Bildung von sedimentierenden Flocken aus den Primär-Agglomeraten verläuft. Dieser Koagulationsprozess wird über die Zugabe eines Koagulationsmittels eingeleitet und benötigt folglich zusätzlich zur Dosierdauer und der Einstellung einer effektiven Konzentration des Koagulationsmittels eine gewisse Reaktionszeit. Die Zeitspanne für die Flockenbildung ist daher in die verfahrenstechnischen Auslegung einer Anlage zur Spülwasserbehandlung mit einzubeziehen. Aus diesem Grund ist im Rahmen der vorliegenden Erfindung die Verfahrensweise im Chargen-Betrieb ("batch-processing") bevorzugt, bei der die Einzelschritte der Koagulation und Ausflockung in einem Koagulationsbehälter durchgeführt werden, wobei ein kontinuierliches Einspeisen von Spülwasser und die kontinuierliche Entnahme des behandelten Spülwassers gewährleistet bleiben soll. Hierfür ist der Koagulationsbehälter vorzugsweise in voneinander getrennten Reaktoren unterteilt.

Ein Reaktor gemäß der vorliegenden Erfindung enthält zumindest ein Rührwerk zum Umwälzen bzw. Durchmischen des Spülwassers während des Behandlungsprozesses, Dosierleitungen zumindest für das Koagulationsmittel und für den Zusatz von Säuren/Basen zur Anpassung des pH-Wertes sowie einen pH-Sensor vorzugsweise oberhalb des Füllstandes, bei dem ein Wechsel in der Betriebsart des Reaktors vorgesehen ist, sobald dieser zu mindestens zu 80 % entleert ist. Ein Koagulationsbehälter, der im Chargen-Betrieb die kontinuierliche Entnahme von Spülwasser und die kontinuierliche Abgabe von gemäß Schritt a) behandeltem Spülwasser leistet, besteht aus mindestens zwei Reaktoren. Für eine diskontinuierliche Verfahrensweise besteht der Koagulationsbehälter aus einem Reaktor.

Für einen kontinuierlichen Betrieb der Spülwasserbehandlung geht man im Schritt a) erfindungsgemäß bevorzugt so vor, dass zunächst Teilvolumina des Spülwassersystems ausschließlich in mindestens einen Reaktor des Koagulationsbehälters bestehend aus mindestens zwei voneinander getrennten Reaktoren eingespeist werden, dort Koagulationsmittel hinzudosiert und der pH-Wert angepasst wird, wobei gleichzeitig aus mindestens einem der anderen Reaktoren Teilvolumina des bereits gemäß Schritt a) behandelten Spülwassers über die Filtrationsstufe abgeführt werden. Dabei findet ein steter Wechsel in der Betriebsart der einzelnen Reaktoren statt, sobald der jeweilige Reaktor entweder zu mindestens zu 80 % entleert oder befüllt ist.

Ein Wechsel der Betriebsart bedeutet, dass ein Reaktor aus dem Behandlungszyklus bestehend aus dem Einspeisen von Teilvolumina des Spülwassers, der Dosierung des Koagulationsmittels und der Anpassung des pH-Wertes in den Entnahmezyklus bestehend aus der Abführung von Teilvolumina des behandelten Spülwassers über die Filtrationsstufe wechselt und umgekehrt. Die jeweiligen in den Koagulationsbehälter eingespeisten und entnommenen Teilvolumina sind zu jedem Zeitpunkt des Verfahrens gleich groß oder gleich groß und konstant, so dass ein Wechsel in der Betriebsart eines Reaktors die Anpassung des Volumenstroms des eingespeisten Spülwassers und/oder des entnommenen behandelten Spülwassers in den jeweiligen anderen Reaktoren bedingt.

Besonders bevorzugt besteht der Koagulationsbehälter aus lediglich zwei von einander getrennten Reaktoren und im Schritt a) werden zunächst Teilvolumina des Spülwassersystems ausschließlich in einen Reaktor eingespeist, dort Koagulationsmittel hinzudosiert und der pH-Wert angepasst, wobei gleichzeitig aus dem anderen Reaktor Teilvolumina des bereits gemäß Schritt a) behandelten Spülwassers über die Filtrationsstufe abgeführt werden, bis ein Wechsel in der Betriebsart beider Reaktoren erfolgt, sobald einer der Reaktoren entweder zu mindestens zu 80 % entleert oder befüllt ist, so dass der jeweils andere Reaktor mit Teilvolumina des Spülwassersystems gespeist wird, dort Koagulationsmittel hinzudosiert und der pH-Wert angepasst wird bzw. Teilvolumina des gemäß Schritt a) behandelten Spülwassers über die Filtrationsstufe aus dem jeweils anderen Reaktor abgeführt werden, wobei ein steter Wechsel in der Betriebsart beider Reaktoren erfolgt, sobald einer der beiden Reaktoren entweder zu mindestens zu 80 % entleert oder befüllt ist.

Als Koagulationsmittel können gemäß der vorliegenden Erfindung die dem Fachmann auf dem Gebiet der Abwasserbehandlung bekannten organischen Verbindungen und anorganische Salze eingesetzt werden. Vorzugsweise ist das Koagulationsmittel im Schritt a) zumindest teilweise ausgewählt aus wasserlöslichen Salzen von Aluminium, Magnesium, Kalzium und Eisen. Bei der Behandlung von Spülwasser aus KTL-Anlagen sind dabei besonders die jeweiligen basisch reagierenden Salze zu bevorzugen, insbesondere wasserlösliche Aluminate wie Natriumaluminat.

Als zusätzliche Bestandteile der Koagulationsmittel, die bei der Spülwasserbehandlung in der Tauchlackierung vorteilhaft sein können, sind Silikate, vorzugsweise Schichtsilikate, besonders bevorzugt Hectorit, Montmorrilonit und/oder Bentonit zu nennen. Der mittlere Partikeldurchmesser der verwendeten Silikate liegt vorzugsweise bei nicht weniger als 5 µm, besonders bevorzugt bei nicht weniger als 10 µm und nicht mehr als 50 µm. Der Gewichtsanteil an Silikat-Partikeln mit einem Partikeldurchmesser von mehr als 5 µm sollte vorzugsweise nicht weniger als 50 %, besonders bevorzugt nicht weniger als 80 % und besonders bevorzugt nicht weniger als 90 % sein, wobei nicht mehr als 10 Gew.-% der Silikat-Partikel einen Durchmesser von mehr als 50 µm aufweisen.

Derartige Silikate beschleunigen die Flockenbildung und liefern dabei vorwiegend große Flocken, die ein leicht filtrierbares Sediment bilden, wobei die Flocken nicht zur Verklebung neigen. Zudem erfolgt die Agglomeration bei Anwesenheit der Silikate unter Einschluss der wasserunlöslichen Hydroxide der Kationen des Koagulationsmittels, so dass die Leitfähigkeit des behandelten Spülwassers nur moderat ansteigt und damit im Schritt c) bei vorgegebener lonenaustauscherkapazität ein größeres Spülwasservolumen entsalzt werden kann, bis eine Regeneration der lonenaustauscherharze erforderlich wird.

Der Anteil an Silikaten im Koagulationsmittel ist erfindungsgemäß nicht begrenzt, jedoch führt ein sehr hoher zu filtrierender Festkörperanteil im Schritt b) dazu, dass das Filtermaterial der Filtrationsstufe häufig erneuert bzw. gewechselt werden muss. Erfahrungsgemäß zeigt sich, dass der Anteil an Silikaten im Koagulationsmittel bezogen auf den Anteil an wasserlöslichen Salzen von Aluminium, Magnesium, Kalzium und Eisen vorzugsweise bei nicht mehr als 3 : 1, besonders bevorzugt nicht mehr als 1 : 1 liegen sollte. Die Zudosierung der Silikate kann im Schritt a) auch getrennt von der Zugabe des Koagulationsmittels erfolgen, vorzugsweise unmittelbar nach der Dosierung der wasserlöslichen Salze von Aluminium, Magnesium, Kalzium und/oder Eisen, aber vor der Anpassung des pH-Wertes des Spülwassers.

Die Dosierung des Koagulationsmittels kann entweder über die in das Spülwasser zudosierte Menge des wasserlöslichen Salzes oder insbesondere bei basisch reagierenden Salzen, wie Natriumaluminat, über die Vorgabe eines im Koagulationsbehälter einzustellenden alkalischen pH-Wertes vorgenommen werden.

Im ersteren Fall wird im Schritt a) zur Koagulation der dispergierten Lackbestandteile so verfahren, dass nicht mehr als 20 mmol, vorzugsweise nicht mehr als 5 mmol, aber nicht weniger als 0,1 mmol, vorzugsweise nicht weniger als 1 mmol Kationen-Äquivalente des Koagulationsmittels pro Liter der im Schritt a) entnommenen Teilvolumina des Spülwassers hinzudosiert werden. Wird das Verfahren im bevorzugten Chargen-Betrieb durchgeführt, so wird die gleiche Menge des Koagulationsmittel pro Liter der im Schritt a) zwischen zwei Wechseln der Betriebsart eines Reaktors des Koagulationsbehälters eingespeisten Spülwasservolumens hinzudosiert.
Der Begriff Kationen-Äquivalente bezeichnet dabei das Produkt aus der Teilchenmenge der Kationen ausgewählt aus Aluminium, Magnesium, Kalzium und Eisen und ihrer kationischen Ladungszahl. 1 Mol Natrium-aluminat entspricht folglich einem KationenÄquivalent von 3 Mol.

Alternativ erfolgt im Schritt a) des erfindungsgemäßen Verfahrens die Entnahme der Teilvolumina und die Zugabe des Koagulationsmittels in den Koagulationsbehälter derart, dass der pH-Wert in diesem zu jedem Zeitpunkt vor der Anpassung des pH-Wertes und vor Schritt b) nicht größer als 10,5 und nicht kleiner als 9,0, vorzugsweise nicht kleiner als 9,5 ist.

Im bevorzugten Chargen-Betrieb wird dem Reaktor des Koagulationsbehälters, der vom Spülwassersystem gespeist wird, Koagulationsmittel derart hinzugefügt, dass der pH-Wert in diesem Reaktor zu jedem Zeitpunkt vor dem Wechsel der Betriebsart des Reaktors und vor der Anpassung des pH-Wertes nicht größer als 10,5 und nicht kleiner als 9,0, vorzugsweise nicht kleiner als 9,5 ist. Die Dosierung des Koagulationsmittels endet dabei bevorzugt, sobald der Reaktor, in dem das Spülwasser eingespeist wird, mindestens 80 %, besonders bevorzugt mindestens 90 % desjenigen Füllstandes bzw. desjenigen Volumens erreicht hat, bei dem ein Wechsel der Betriebsart vorgesehen ist.

In der zeitlichen Abfolge des Schritts a) der vorliegenden Erfindung wird zuletzt der pH-Wert angepasst. Die Anpassung des pH-Wertes erfolgt demnach im Koagulationsbehälter nach der Zudosierung des Koagulationsmittels und im bevorzugten Chargen-Betrieb vor dem Wechsel der Betriebsart, wobei ein pH-Wert von vorzugsweise nicht kleiner ist als 6,0, besonders bevorzugt nicht kleiner ist als 6,5, aber vorzugsweise von nicht größer ist als 8,0, besonders bevorzugt nicht größer ist als 7,5 eingestellt wird.

Die Filtrationsstufe im Schritt b) umfasst gemäß der vorliegenden Erfindung vorzugsweise solche Filtrationsprozesse, die der kuchenbildenden Filtration zuzuordnen sind und schließt demnach insbesondere "Cross Flow" Filtrationsprozesse aus, bei denen neben einem Permeat auch stets ein Retentat anfällt, welches ein Konzentrat des zu filtrierenden Feststoffes darstellt und als solches nicht in das Spülwassersystem zurückgeführt werden kann und entsprechend als Abwasser zu behandeln ist. Zu den "Cross-Flow" Filtrationsverfahren gehören die Membrantechniken der Ultra- und Nanofiltration, sowie die Umkehrosmose.

Das Prinzip der kuchenbildenden Filtration besteht demgegenüber darin, dass die Flüssigkeit unter dem Einfluss eines Druckgradienten durch ein Filtermedium strömt, an dem der Feststoff zurückgehalten wird. Die abgelagerten Partikeln bilden ein Haufwerk, den sogenannten Filterkuchen, an dessen Oberfläche der Feststoff im weiteren Verlauf abgeschieden wird. Eine effiziente Filtration zeichnet sich insbesondere dadurch aus, dass der Filterkuchen schnell aufgebaut wird und wenig Flüssigkeit enthält.

Erfahrungsgemäß zeigt sich, dass im Schritt b) insbesondere kuchenbildende Filter mit einer Porengröße des Filtermaterials in der Filtrationsstufe von nicht mehr als 20 µm, vorzugsweise von nicht mehr als 10 µm besonders geeignet sind, die im Schritt a) koagulierten Lackpartikel nahezu vollständig aus dem Spülwasser zu entfernen. Eine ggf. im Filtrat der Filterstufe enthaltene Restmenge von partikulären Bestandteilen des Tauchlackes mit einer Partikelgröße unterhalb von 20 µm bzw. 10 µm wirkt sich bei der Rückführung des behandelten und entsalzten Spülwassers in das Spülwassersystem nach Schritt c) nicht mehr negativ auf die Qualität der Tauchlackbeschichtung aus. Eine weitergehende Reduzierung der Porengröße der Filterstufe rechtfertigt sich wegen des erhöhten verfahrenstechnischen Aufwandes, der darin besteht Filtermaterial häufiger erneuern zu müssen und einen erhöhten Druck vorzugeben, um die Trennwirkung mit dem gewünschten Volumendurchsatz aufrecht zu erhalten, zumeist nicht und ist bei hinreichender Koagulation der Lackpartikel im Schritt a) und entsprechender Flockengröße auch nicht erforderlich. Die bevorzugte minimale Porengröße des Filtermaterials beträgt daher nicht weniger als 1 µm.

Vorzugsweise werden in einem erfindungsgemäßen Verfahren, welches im kontinuierlichen Betrieb arbeiten soll, Druckbandfilteranlagen eingesetzt, so dass die Kuchenbildung bei der Filtration begrenzt und stets neues bzw. regeneriertes Filtermaterial für die Abtrennung der koagulierten Lackpartikel bereit steht. Im diskontinuierlichen Betrieb des erfindungsgemäßen Verfahrens können hingegen auch Beutel- oder Kerzenfilter zum Einsatz kommen, die in regelmäßigen Zeitintervallen ausgetauscht werden müssen.

Zur Gewinnung von vollentsalztem Spülwasser für die Rückspeisung in das Spülwasserbad wird im erfindungsgemäßen Schritt c) ein lonenaustauschersystem, welches aus einer Serienanordnung von Kationen- und Anionenaustauscher besteht eingesetzt. Alternativ können vorzugsweise auch Mischbettaustauscher verwendet werden.

Vollentsalztes Wasser liegt gemäß der Erfindung dann vor, wenn die Leitfähigkeit des nach dem Schritt c) behandelten Spülwassers nicht größer als 10 µS/cm, vorzugsweise nicht größer als 5 µS/cm ist.

Für die Pflege von Spülbädern in der Tauchlackierung erfolgt die Entnahme der Teilvolumina des Spülwassers in Schritt a) und die Rückführung der Teilvolumina des behandelten Spülwassers in Schritt c) bevorzugt so, dass die Leitfähigkeit des Spülwassers im Spülwassersystem 80 µS/cm, vorzugsweise 60 µS/cm und besonders bevorzugt 40 µS/cm nicht überschreitet. Hierdurch wird eine konstant niedrige Elektrolytbelastung des Spülwassers im Spülwasserbad eingestellt, die erfahrungsgemäß keine Beschädigung der Lackbeschichtung während des Spülvorganges des frisch beschichteten Bauteils hervorruft.

Handelsübliche Tauchlacke beinhalten neben dem dispergierten Lack weitere organische Bestandteile, die, wenn sie sich im Spülwassersystem anreichern, zu einer Verschlechterung der Lackeigenschaften der beschichteten Bauteile beim Spülvorgang beitragen können. Aus diesem Grund können die im erfindungsgemäßen Verfahren entnommenen Teilvolumina des Spülwassersystems zusätzlich über einen adsorptiven Filter, vorzugsweise einen Aktivkohlefilter, geführt werden. Dabei werden die Teilvolumina besonders bevorzugt vor dem lonenaustauschersystem, also vor der Entsalzung über einen solchen adsorptiven Filter geführt, um eine zusätzliche Belastung des lonenaustauscherharzes mit organischen Komponenten zu vermeiden.

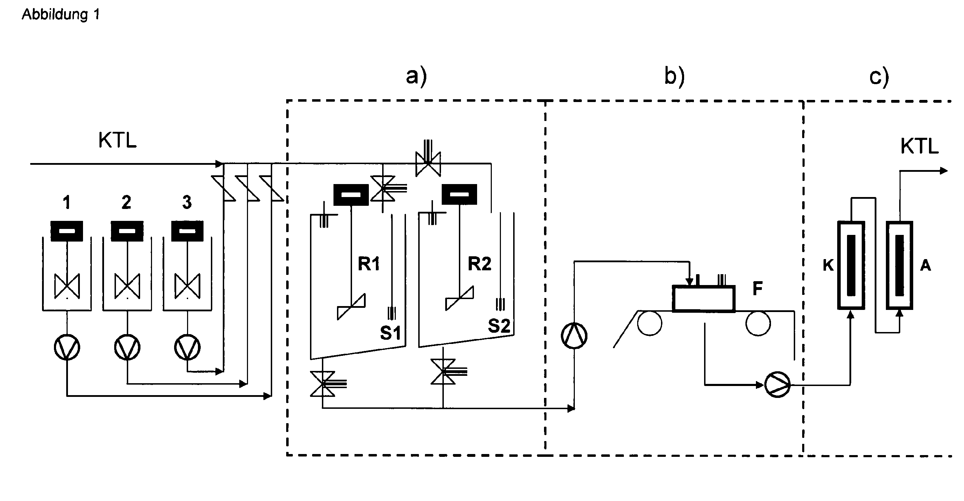

Die Abbildung 1 zeigt das schematische Prozessdiagramm einer bevorzugten Ausführungsform des erfindungsgemäßen Verfahrens bestehend aus einem Koagulationsbehälter a), einer Filtrationsstufe b) und dem Ionenaustauschersystem c), sowie den Dosiereinheiten 1-3 für das Koagulationsmittel 1-2 und für die Anpassung des pH-Wertes 3. Der Koagulationsbehälter b) besteht aus zwei getrennten Reaktoren R1-R2 jeweils mit Rührwerk und pH-Sensor S1-S2, die unabhängig voneinander von den Dosiereinheiten 1-3 adressiert werden können. Die Reaktoren R1-R2 geben bei Erreichen eines Füllstandes bzw. eines Volumens von zumindest 80% das nach der Einspeisung aus dem Spülwasser über die Leitung KTL im Reaktor behandelte Spülwasser an die Filterstufe b) ab. Dort wird das behandelte Spülwasser mit seiner Sedimentfracht über einen Druckbandfilteranlage F geführt und das Filtrat über die lonenaustauscheranlage c) bestehend aus einer Serienschaltung eines Kationenaustauscherharzes K mit einem Anionenaustauscherharz A über die Leitung KTL zurück in das Spülwassersystem geleitet.

## Patentansprüche

1. Verfahren zur Gewinnung von vollentsalztem Wasser aus dem Spülwasser der Tauchlackierung und Rückführung desselben in das Speisewasser des Spülwassersystems, **dadurch gekennzeichnet, dass**
a) Teilvolumina des Spülwassersystems in einen Koagulationsbehälter
enthaltend das Spülwasser überführt werden, dort Koagulationsmittel
hinzudosiert und der pH-Wert angepasst wird, und
b) aus dem Koagulationsbehälter Teilvolumina des behandelten Spülwassers über eine Filtrationsstufe geschickt und dabei von koagulierten Lackrückständen befreit
werden,
c) wonach das Filtrat der Filtrationsstufe über ein lonenaustauschersystem geschickt und zumindest Teilvolumina des entsalzten Permeates des lonenaustauschersystems in das Spülwassersystem der Tauchlackierung zurückgeführt werden.

2. Verfahren gemäß Anspruch 1, **dadurch gekennzeichnet, dass** die Entnahme der Teilvolumina des Spülwassers in Schritt a) und die Rückführung der Teilvolumina des behandelten Spülwassers in Schritt c) so eingestellt ist, dass die Leitfähigkeit des Spülwassers im Spülwassersystem 80 µS/cm, vorzugsweise 60 µS/cm und besonders bevorzugt 40 µS/cm nicht überschreitet.

3. Verfahren gemäß einem oder beiden der Ansprüche 1 und 2, **dadurch gekennzeichnet, dass** die Entnahme der Teilvolumina in den Verfahrensschritten a)-c) in allen Einzelschritten kontinuierlich und über einen gleich großen Volumenstrom erfolgt.

4. Verfahren gemäß einem oder mehreren der Ansprüche 1 bis 3, **dadurch gekennzeichnet, dass** der Koagulationsbehälter im Schritt a) aus zwei voneinander getrennten Reaktoren besteht, wobei zunächst Teilvolumina des Spülwassersystems ausschließlich in einen Reaktor gespeist werden, dort Koagulationsmittel hinzudosiert und der pH-Wert angepasst wird, wobei gleichzeitig aus dem anderen Reaktor Teilvolumina des gemäß Schritt a) behandelten Spülwassers über die Filtrationsstufe abgeführt werden, bis ein Wechsel in der Betriebsart beider Reaktoren erfolgt, sobald einer der beiden Reaktoren entweder zu mindestens zu 80 % entleert oder befüllt ist, so dass der jeweils andere Reaktor mit Teilvolumina des Spülwassersystems gespeist wird, dort Koagulationsmittel hinzudosiert und der pH-Wert angepasst wird bzw. Teilvolumina des gemäß Schritt a) behandelten Spülwassers über die Filtrationsstufe aus dem jeweils anderen Reaktor abgeführt werden, wobei ein steter Wechsel in der Betriebsart beider Reaktoren erfolgt, sobald einer der beiden Reaktoren entweder zu mindestens zu 80 % entleert oder befüllt ist.

5. Verfahren gemäß einem oder mehreren der Ansprüche 1 bis 4, **dadurch gekennzeichnet, dass** das Koagulationsmittel im Schritt a) ausgewählt ist aus wasserlöslichen Salzen von Aluminium, Magnesium, Kalzium und Eisen.

6. Verfahren gemäß Anspruch 5, **dadurch gekennzeichnet, dass** basisch reagierende wasserlösliche Salze eingesetzt werden, vorzugsweise wasserlösliche Aluminate.

7. Verfahren gemäß einem oder beiden der Ansprüche 5 und 6, **dadurch gekennzeichnet, dass** das Koagulationsmittel zusätzlich Silikate, vorzugsweise Schichtsilikate, besonders bevorzugt Hectorit, Montmorillonit und/oder Bentonit enthält.

8. Verfahren gemäß einem oder beiden der Ansprüche 6 und 7, **dadurch gekennzeichnet, dass** im Schritt a) die Entnahme der Teilvolumina und die Zugabe des Koagulationsmittels in dem Koagulationsbehälter derart erfolgt, dass der pH-Wert in diesem zu jedem Zeitpunkt vor der Anpassung des pH-Wertes und vor Schritt b) nicht größer als 10,5 und nicht kleiner als 9,0, vorzugsweise nicht kleiner als 9,5 ist.

9. Verfahren gemäß einem oder mehreren der Ansprüche 5 bis 7, **dadurch gekennzeichnet, dass** bezogen auf die im Schritt a) entnommenen Teilvolumina des Spülwassers nicht mehr als 20 mmol, vorzugsweise nicht mehr als 5 mmol, aber nicht weniger als 0,1 mmol, vorzugsweise nicht weniger als 1 mmol Kationen-Äquivalente des Koagulationsmittels pro Liter hinzudosiert werden.

10. Verfahren gemäß einem oder mehreren der Ansprüche 1 bis 9, **dadurch gekennzeichnet, dass** im Schritt a) die Anpassung des pH-Wertes im Koagulationsbehälter nach der Zudosierung des Koagulationsmittels auf einen Wert von nicht kleiner ist als 6,0, vorzugsweise nicht kleiner ist als 6,5, aber nicht größer ist als 8,0, vorzugsweise nicht größer ist als 7,5 erfolgt.

11. Verfahren gemäß einem oder mehreren der vorherigen Ansprüche, **dadurch gekennzeichnet, dass** die Porengröße des Filtermaterials in der Filtrationsstufe im Schritt b) nicht mehr als 20 µm, vorzugsweise nicht mehr als 10 µm, jedoch mehr als 1 µm beträgt.

12. Verfahren gemäß einem oder mehreren der vorherigen Ansprüche, **dadurch gekennzeichnet, dass** das lonenaustauschersystem im Schritt c) aus einer Serienanordnung von Kationen- und Anionenaustauscher besteht.

13. Verfahren gemäß einem oder mehreren der vorherigen Ansprüche, **dadurch gekennzeichnet, dass** die entnommenen Teilvolumina des Spülwassersystems zusätzlich über einen adsorptiven Filter, vorzugsweise einen Aktivkohlefilter, geführt werden, vorzugsweise unmittelbar vor dem Schritt c).
